# EUROPÄISCHE PATENTSCHRIFT

(11) **EP 1 003 402 B1**
(45) Veröffentlichungstag und Bekanntmachung des Hinweises auf die Patenterteilung: **21.11.2001**
(21) Anmeldenummer: 98943892.4
(22) Anmeldetag: 18.08.1998
(51) Int. Cl.: A47C 7/40

(54) **EINRICHTUNG ZUM WIEDERLÖSBAREN FESTLEGEN VON WENIGSTENS EINEM KISSEN**
DEVICE FOR DETACHABLY FIXING AT LEAST ONE CUSHION
DISPOSITIF PERMETTANT LA FIXATION AMOVIBLE D'AU MOINS UN COUSSIN

(30) Priorität: 18.08.1997 DE 29714708 U; 09.06.1998 DE 19825673
(43) Veröffentlichungstag der Anmeldung: 31.05.2000
(73) Patentinhaber: Günther, Peter, 72285 Herzogsweiler (DE)
(72) Erfinder: Günther, Peter, 72285 Herzogsweiler (DE)
(74) Vertreter: Weiss, Peter, Dr.
(86) Internationale Anmeldenummer: EP9805222
(87) Internationale Veröffentlichungsnummer: WO9908569

(56) Entgegenhaltungen:
- EP-A1- 0 412 926
- EP-A3- 0 700 653
- DE-A- 1 654 203
- FR-A- 1 263 786
- GB-A- 2 117 235
- GB-A- 2 208 596
- US-A- 2 756 808
- US-A- 3 974 827
- US-A- 4 161 337
- US-A- 4 362 334

## Beschreibung

Die vorliegende Erfindung betrifft eine Einrichtung zum wiederlösbaren Festlegen von wenigstens einem Kissen an einer Rückenlehne und oder Sitzfläche eines Sitzelementes, insbesondere Fahrzeugsitzes, Stuhles oder Sofas, wobei wenigstens ein Halteelement zur Aufnahme des zumindest einen Kissens dem Sitzelement wiederlösbar zugeordnet und das zumindest eine Halteelement bügelartig und/oder winkelig ausgebildet ist.

Derartige Einrichtungen sind in vielfältigster Form und Ausführung auf dem Markt bekannt. Nach dem Deutschen Gebrauchsmuster DE 91 00 735 ist eine anatomische Auflage für einen Sessel od. dgl. aufgezeigt, wobei mittels einer Mehrzahl von Gruten ein Kissen an ein Rückenteil eines Stuhles od. dgl. befestigt werden kann. Nachteilig ist, dass ein derartiges Kissen nur sehr aufwendig an die Rückenlehne festgelegt werden kann. Ein schnelles Entnehmen oder Auswechseln ist nicht möglich.

Ferner ist nach der DE-GM 18 57 365 eine zusätzliche Rückenstütze für Kraftfahrzeugsitze aufgezeigt, die ein gefedertes Polster aufweist, an welches sich im wesentlichen zwei, das Gerüst der Rückstenstüzen bildenden gegenüberliegende Tragarme anschliessen, die hinter eine Rückenstütze und insbesondere hinter eine Rückenlehne des Kraftfahrzeugsitzes greifen.

Das Polster muss zusätzlich an der Rückenstütze mit einem Gurt abgestützt werden. Eine derartige Rückenstütze ist äusserst komplex aufgebaut, umständlich zu montieren oder demontieren, was unerwünscht ist.

Bei derartigen herkömmlichen Rückenstützen ist eine Montage äusserst aufwendig. Auch ein Verstellen bspw. der Höhe des Kissens kann nur mit erheblichem Aufwand vorgenommen werden. Auch ein entsprechendes Austauschen oder Entnehmen des Kissens, bspw. für einen anderen Fahrer, ist nicht ohne erheblichen Aufwand möglich. Zudem sind derartige Rückenkissen teuer in der Herstellung und aufwendig beim Handling.

Die US 2,756,808 beschreibt eine Halterung für ein Nackenund ein Rückenkissen, welche aus einem umlaufenden Gestell gebildet ist, welches teilweise über entsprechende Haltearme hinter die Rückenlehne eines Sitzelementes greift, um das rohrartig ausgebildete Gestell dort zu haltern.

Die US 3,974,827 beschreibt ein orthopädisches Kissen, welchem ein aufblasbares Element zugeordnet ist, wobei eine Handluftpumpe aus dem Element über einen Schlauch herausragt, welchem ggf. zum Ablassen ein Ventil zugeordnet ist. Das orthopädische Kissen ist fest mit der Rückenlehne eines Stuhles verbunden.

Die US 4,161,337 beschreibt eine starre Halteplatte, an welcher zwei Bügel abragen, die zur Aufnahme von Stützkissenelementen dienen. Entlang diesem ist das Kissen festlegbar, insbesondere höhenverstellbar angeordnet. Dabei entspricht die Grundplatte zur Halterung der beiden Stützelementen in etwa der Sitzfläche des Sitzelementes.

Eine ähnliche Einrichtung beschreibt die US 4,362,334, bei welcher in eine Grundplatte eine winklig dazu abragende Platte angeordnet ist, an welcher verschiebbar die Stützkisen angeordnet sind. Auch hier ist die Grundplatte entsprechend einer Sitzfläche eines Sitzelementes ausgebildet.

Nach der GB 2 117 235 A ist ein Rückensitzkissen beschrieben, welches mittels einem Halteband an einem Sitzelement festgelegt wird. Das Halteband greift in das Sitzelement ein und muss um die Rückenlehne herumgelegt werden.

Die EP 0 412 926 A1 beschreibt ein aufwendiges Gestell zur Halterung eines Nackenkissens für ein Sitzmöbel, welches zur Befestigung unter die Sitzmöbel geschoben wird.

Die EP 0 700 653 offenbart eine Rückenstützeinrichtung, insbesondere für den Spinalbereich der Wirbelsäule, welche entsprechend ausgeformte Bereiche für die Wirbelsäule aufweist, wobei unterschiedliche Antriebseinrichtungen Verstellmechanismen vorgesehen sind, um die einzelnen Stützelemente entsprechend zum Anpassen an die Wirbelsäule zu verstellen. Diese Verstelleinrichtungen sind in der Rückenlehne als fester Bestandteil integriert und nicht ohne weiteres austauschbar.

Die DE 1 654 203 A zeigt eine Rückenstütze, welche aus einzelnen Haltebügeln gebildet ist, welche die Rückenlehne vollständig durchgreifen und welche von einer Rückseite der Rückenlehne mit einer entsprechenden Sicherungsplatte zum Abstützen gesichert werden muss. Eine derartige Vorrichtung ist sehr aufwendig zu montieren und insbesondere zu demontieren.

Die FR 1.263.786 beschreibt ein Rückenstützkissen, an welchem zwei Haltebügel festgelegt sind. Diese Haltebügel müssen endseits zu Stützung des Rückenstützkissens an der Sitzfläche innerhalb des Sitzelementes fest montiert werden. Ein schnelles wiederlösen und austauschen ist nicht möglich.

Nach der GB 2 208 596 A ist eine Einrichtung zur Unterstützung und Abstützung des Rückens aufgezeigt, bei welcher über die vollständige Rückenlehne ein Band vorgesehen ist, welchem höhenverstellbar ein Rücken-und/oder Nackenkissen angeordnet ist.

Nachteilig ist hier, dass die Einrichtung aufwendig und umständlich über die Rückenlehne aufgesteckt werden muss. Hierdurch sind die Einsatzmöglichkeiten beschränkt, wenn bspw. Rückenlehnen mit Nackenstützen versehen sind. Dann ist ein Montieren und insbesondere Demontieren erschwert.

Der vorliegenden Erfindung liegt die Aufgabe zugrunde, eine Einrichtung zum wiederlösbaren Festlegen von wenigstens einem Kissen an einer Rückenlehne der o. g. Art zu schaffen, welches die genannten Nachteile beseitigt, und mit welcher auf schnelle, einfache und kostengünstige Weise ein Kissen, insbesondere Rückenkissen an eine Rückenlehne oder eine Sitzfläche eines Sitzelementes festgelegt werden kann. Dabei sollen Herstellungskosten erheblich reduziert sein.

Zur Lösung dieser Aufgabe führt, dass das Halteelement aus einem Aufnahmeträger und einem daran anschliessenden Stützträger gebildet ist, wobei der Aufnahmeträger gewölbt und elastisch zu der Rückenlehne hin ausgerichtet, ausgebildet ist, sodass durch die Wölbung des Aufnahmeträgers sich das Halteelement vorgespannt zwischen Sitzfläche und Rückenlehne des Sitzelementes einsetzen lässt.

Dieses Halteelement, welches vorzugsweise bügelartig aus einem Aufnahmeträger für das Kissen und einem Stützträger zur Befestigung und Abstützung des Halteelementes zwischen Rücklehne und Sitzfläche eingesetzt ist, kann auf einfache Weise sehr schnell ausgetauscht werden. Der Stützträger greift bevorzugt zwischen Sitzfläche und Rückenlehne ein. Dort wird er festgespannt gehalten. Ggf. können Haftstreifen, insbesondere Klettbänder, Klebestreifen od. dgl. vorgesehen sein, um ein Haften zu untersützen. Der Aufnahmeträger, welcher vorzugsweise winkelig gebogen von dem Stützträger abragt, nimmt auf einer Seite das Kissen auf. Über Klettbänder oder entsprechende Haftstreifen kann das Kissen dort höhenverstellbar wiederlösbar festgelegt oder ausgetauscht werden.

Als besonders günstig hat sich erwiesen, wenn der Aufnahmeträger leicht elastisch vorgebogen ist, so dass er sich an die Form der Rückenlehne anpasst. Dort liegt er leicht mit Druck beaufschlagt an.

Die entsprechenden Flächen des Aufnahmeträgers können ebenfalls mit Haftstreifen zumindest teilweise versehen sein, um diesen an der Rückenlehne wiederlösbar zu fixieren und zusätzlich das Kissen aufzunehmen.

Ein derartiges Halteelement ist vorzugsweise aus Kunststoff streifenartig und elastisch hergestellt. Es ist schnell ohne grösseren Montage- oder Demontageaufwand aus dem Sitzelement entnehmbar. Es hält das Kissen in jeder gewünschten Position fest.

Im Rahmen der vorliegenden Erfindung soll auch liegen, dass eine Mehrzahl von entsprechenden Halteelementen zur Stützung und zur Aufnahme von Kissen zwischen Rückenlehne und Sitzfläche angeordnet sein können.

Die verschiedenen Ausführungsformen mit Halteplatten ermöglichen auch ein Einbau in unterschiedliche Sitze, Stühle od. dgl.. Es ist sogar möglich, das Halteelement zwischen Sitzfläche und Rückenlehne derart zu fixieren, wenn die Rückenlehne oberhalb der Sitzfläche endet. Dies ist bspw. für Bürostühle von Vorteil.

Eine Verstellmöglichkeit für das Kissen ist auch dadurch gegeben, wenn in dem Kissen Taschen in unterschiedlicher Höhe angeordnet sind, in welche die Halteelemente gesteckt werden können. Hierdurch kann das Kissen beispielsweise senkrecht oder auch den Bereich zwischen einer Rückenlehne und einer Sitzfläche über Brücken angeordnet werden.

Insgesamt ist mit der vorliegenden Erfindung eine Einrichtung zum wiederlösbaren Festlegen von einem Kissen an einer Rückenlehne und/oder Sitzfläche eines Sitzelementes geschaffen, welches universell einsetzbar und sehr kostengünstig herzustellen ist. Zudem können die verschiedensten Materialien für Kissen und deren Überzüge verwendet werden. Auch ist daran gedacht ein Kissen mit einem entsprechen Überzug mit Heizelementen zu versehen.

In einem weiteren Ausführungsbeispiel der Erfindung ist vorgesehen, in dem Kissen einen aufblasbaren Luftsack zu integrieren. Hierdurch kann das Kissen einem Rücken wesentlich besser angepasst werden. Der Luftsack kann beispielsweise mit einem ausserhalb des Kissens angeordneten Luftspeicher oder einer Luftpumpe verbunden werden. Bevorzugt ist aber eine Einrichtung zum Befüllen des Luftsackes mit einem Gas selbst in dem Kissen angeordnet. Diese Einrichtung besteht bevorzugt der Einfachheit halber aus einer handbetätigbaren Luftpumpe, einem handbetätigbaren Ablassventil und einer Zuleitung zu dem Luftsack

Weitere Vorteile, Merkmale und Einzelheiten der Erfindung ergeben sich aus der nachfolgenden Beschreibung bevorzugter Ausführungsbeispiele sowie anhand der Zeichnungen; diese zeigt in

Figur 1 eine perspektivische Darstellung einer erfindungsgemässen Einrichtung zum wiederlösbaren Festlegen von Kissen an einer Rückenlehne oder Sitzfläche eines Sitzelementes;

Figur 2a eine Seitenansicht eines erfindungsgemässen Halteelementes zum Aufnehmen eines Kissens;

Figur 2b eine Seitenansicht eines weiteren Ausführungsbeispiels des Halteelementes gemäss den Figuren 1 und 2a;

Figur 2c eine Seitenansicht des Halteelementes gemäss Figur 2a mit wiederlösbarer Halteplatte;

Figur 2d eine Seitenansicht des Halteelementes gemäss Figur 2b in einer Gebrauchslage;

Figur 3 eine Seitenansicht des Halteelementes gemäss Figur 2a mit Kissen in einer anderen Gebrauchslage;

Figur 4 eine perspektivische Ansicht eines als Schalenelement ausgebildeten Halteelements;

Figur 5 eine schematisch dargestellte Seitenansicht eines weiteren Halteelementes in einer möglichen Gebrauchslage;

Figuren 6 bis 9 Seitenansichten weiterer Halteelemente in Gebrauchslage;

Figur 10 eine perspektivische Ansicht eines erfindungsgemässen Kissens, verwendet bei dem Ausführungsbeispiel gemäss Figur 9;

Figur 11 eine Draufsicht auf ein weiteres Kissen.

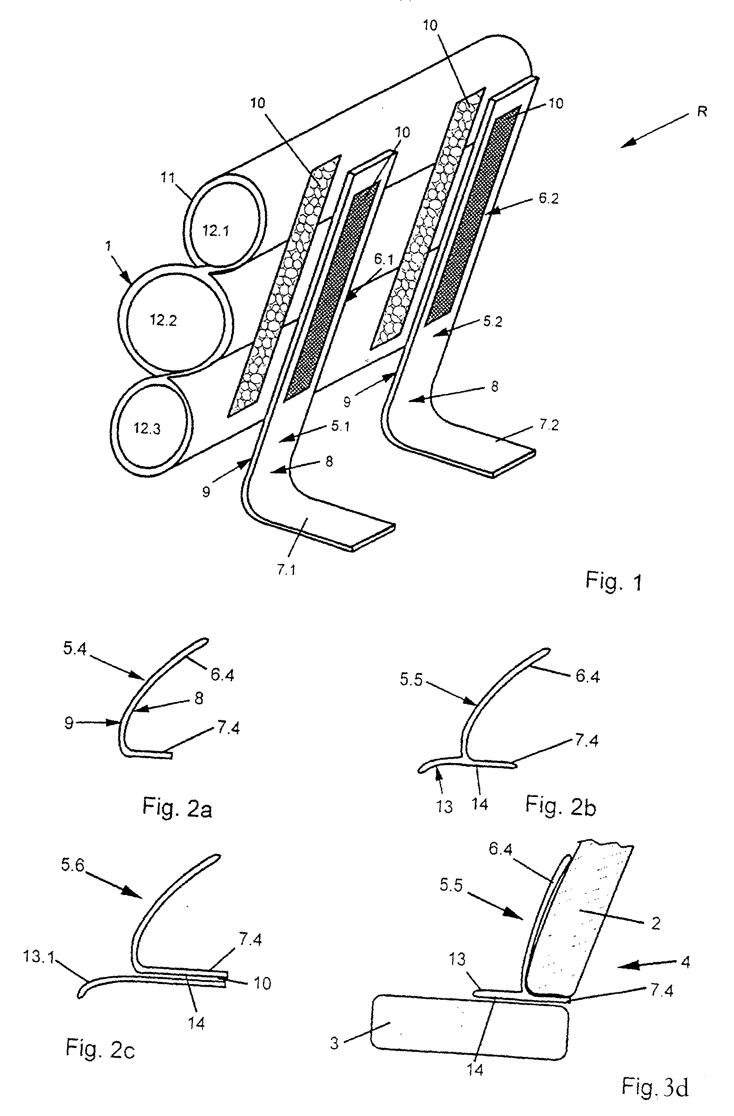

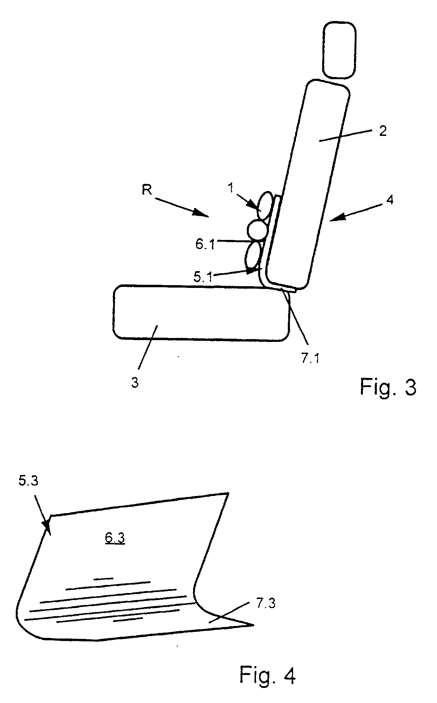

Gemäss den Figuren 1 und 3 weist eine erfindungsgemässe Einrichtung R zum wiederlösbaren Festlegen eines Kissens 1 an einer Rückenlehne 2 und/oder einer Sitzfläche 3 eines Sitzelementes 4 zumindest ein Halteelement 5.1, 5.2 auf.

Das erfindungsgemässe Halteelement 5.1, 5.2 zur Aufnahme des zumindest einen Kissens ist vorzugsweise bügelartig und winkelig ausgebildet. Es weist einen Aufnahmeträger 6.1, 6.2 auf, an welchen sich ein Stützträger 7.1, 7.2 anschliesst. An den Halteelementen 5.1, 5.2, bzw. an deren Aufnahmeträger 6.1, 6.2 und Stützträger 7.1, 7.2 können bevorzugt an deren inneren Fläche 8 oder äusseren Fläche 9 zumindest teilweise Haftstreifen 10 vorgesehen sein. Die Haftstreifen 10 sind zumindest teilweise auf den Flächen 8, 9 angeordnet. Diese sind vorzugsweise als Klettbänder mit Schlaufen oder Häkchen ausgebildet. Entsprechend dazu passende Haftstreifen 10 sind beispielsweise an dem Kissen 1 vorgesehen, um diese höhenverstellbar an dem Halteelement 5.1, 5.2 wiederlösbar festzulegen.

Wie insbesondere aus Figur 3 hervorgeht, kann es von Vorteil sein, wenn der Stützträger 7.1, 7.2 zumindest teilweise mit Haftstreifen 10 versehen ist. Damit lässt er sich an der Rückenlehne 2 und/oder an der Sitzfläche 3 fixieren und festlegen.

Das Halteelement 5 ist vorzugsweise von elastischer Art und schmal und länglich ausgebildet. Es ist aus Kunststoff hergestellt, kann auch aus Metall oder Verbundmaterialien hergestellt sein.

Wie insbesondere aus Figur 1 hervorgeht, ist der Stützträger 7.1, 7.2 kürzer als der Aufnahmeträger 6.1, 6.2 ausgebildet. Am Aufnahmeträger 6.1, 6.2 kann an dessen äusseren Fläche 9 das Kissen höhenverstellbar angeordnet werden.

Vom vorliegenden Erfindungsgedanken sei auch umfasst, dass entsprechend Figur 4 das Halteelement 5.3 mit Aufnahmeträger 6.3 sowie Stützträger 7.3 schalenartig ausgebildet sein kann. Bevorzugt ist das Halteelement 6.1, 6.2 jedoch streifenartig und schmal ausgebildet.

Ferner sei daran gedacht, dass beispielsweise ein hier nicht dargestellter und bezifferter Überzug über den Aufnahmeträger 6.1 bis 6.3 aufgezogen wird, an welchem die entsprechenden Haftstreifen 10 vorgesehen sind. An diesem Überzug kann dann einerseits an der äusseren Fläche 9 das Kissen 1 und andererseits die Rückenlehne 2 festgelegt bzw. fixiert werden. Der Überzug kann auswechselbar und in der entsprechenden Farbe und Material des Kissens 1 hergestellt sein.

Bevorzugt ist das Kissen 1 aus einem Überzug 11 mit darin angeordneten Schaumstoffwalzen 12.1 bis 12.3 gebildet. Die Schaumstoffwalzen 12.1, 12.3 sind bevorzugt von elyptischer und die Schaumstoffwalze 12.2 von runder Art.

In dem Ausführungsbeispiel gemäss Figur 2a ist ein Halteelement 5.4 aufgezeigt, welches dem Halteelement 5.1, 5.2 in etwa entspricht. Dieses ist als Streifenelement ausgeformt. Eine Besonderheit dieses vorliegenden Halteelementes 5.4 ist, dass sein Aufnahmeträger 6.4 gewölbt ausgebildet ist. Dieser schliesst winkelig an den Stützträger 7.4 an. Das Halteelement 5.4 kann ebenfalls mit hier nicht näher dargestellten Haftstreifen 10, insbesondere an den Flächen 8 und 9, versehen sein. Durch die Wölbung des Aufnahmeträgers 6.4 lässt sich das Halteelement 5.4 vorgespannt zwischen Sitzfläche 3 und Sitzelement 4, wie es in Figur 4 dargestellt ist, einsetzen.

In einem weiteren Ausführungsbeispiel gemäss Figur 2b ist ein Halteelement 5.5 aufgezeigt, welches im wesentlichen dem gemäss Figur 2a entspricht. Bevorzugt schliesst zwischen dem Aufnahmeträger 6.4 und Stützträger 7.4 eine Halteplatte 13 an. Die Halteplatte 13 ist leicht gewölbt nach unten ausgebildet. Diese verläuft in der Verlängerung des Stützträgers 7.4. Die Halteplatte 13, welche auch streifenartig ausgebildet sein kann, gibt zusätzlichen Halt und verhindert ein Herausrutschen des Halteelementes 5.5, wenn es zwischen Rückenlehne 2 und Sitzfläche 3 (siehe Figur 2d) eingesetzt ist. An das Aufnahmeelement 6.4 kann in oben beschriebener Weise das Kissen 1 aufgeschoben oder fixiert werden.

Ferner soll hier auch daran gedacht sein, die Halteplatte 13 mit entsprechenden Haftstreifen 10, vorzugsweise an einer Unterseite 14 zu versehen, um zusätzlich ein Herausrutschen zu verhindern und eine Fixierung zu verstärken. Dieses Halteelement 5.4 ist einstückig bzw. einteilig hergestellt.

In dem Ausführungsbeispiel gemäss Figur 2c ist jedoch ein Halteelement 5.6 aufgezeigt, welches im wesentlichen dem Halteelement 5.4 gemäss Figur 2a entspricht. Jedoch schliesst sich hier die Halteplatte 13.1 nicht einstückig an, sondern kann über hier angedeutete Haftstreifen 10 mit der Unterseite 14 des Stützträgers 7.4 wiederlösbar verbunden werden. Ein Nachrüsten des Halteelementes 5.4 mit einer entsprechenden Halteplatte soll hier ebenfalls möglich sein.

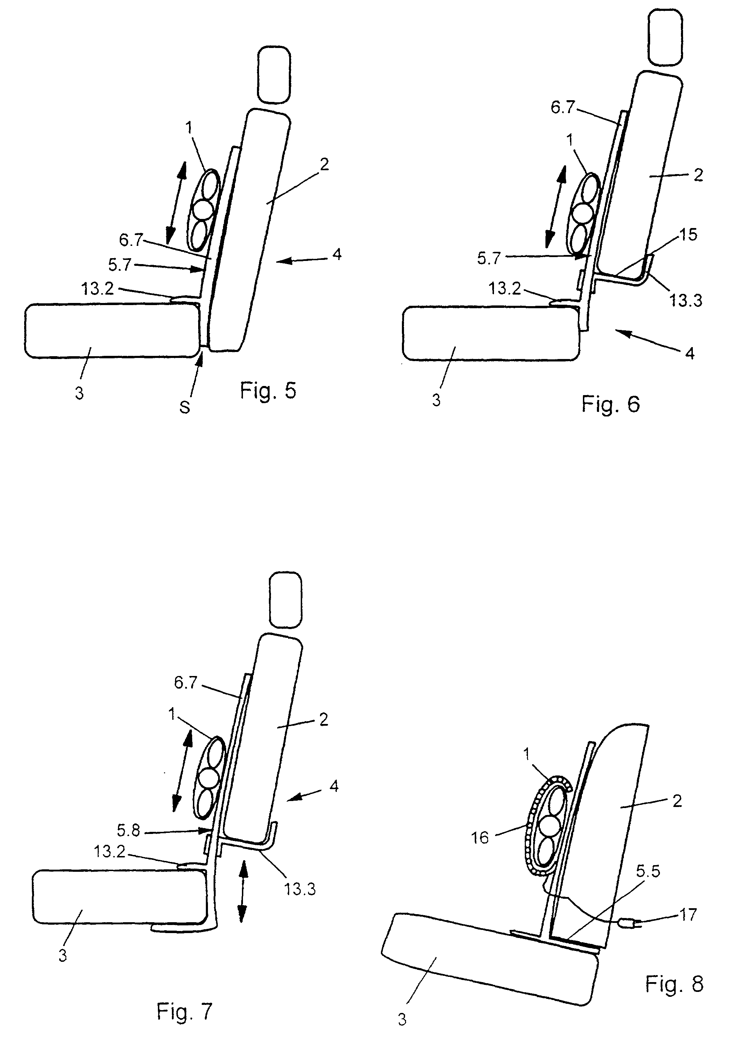

Nach Figur 5 ist ein Halteelement 5.7 dargestellt, welches im wesentlichen aus einem Aufnahmeträger 6.7 besteht, welcher zwischen Sitzfläche 3 und Rückenlehne 2 eingesteckt ist. Dabei verläuft die Rückenlehne 2 hinter die Sitzfläche 3, wobei dazwischen ein vertikaler Spalt S gebildet ist. In diesen Spalt S lässt sich das Halteelement 5.7, insbesondere dessen Aufnahmeträger 6.7 einstecken. Damit es nach unten hin nicht abrutschen kann, ist das Halteelement 5.7 mit einer zur Sitzfläche 3 hin abragenden Halteplatte 13.2 versehen.

Auch hier soll daran gedacht sein, eine Unterseite der Halteplatte 13.2 sowie auch den Aufnahmeträger 6.7 in oben beschriebener Weise mit Haftstreifen 10 zu versehen.

Gemäss Figur 6 ist dem Halteelement 5.7 gemäss Figur 5 eine weitere, bevorzugt verschiebbare Halteplatte 13.3 zugeordnet, welche zumindest teilweise die Rückenlehne 2 an einer Unterseite 15 umgreift. Hierdurch wird das Halteelement 5.7 über die Halteplatte 13.2 gegen die Sitzfläche 3 und über die Halteplatte 13.3 gegen eine Unterkante 15 der Rückenlehne 2 vorgespannt. Dies ist insbesondere von Vorteil, wenn die Rückenlehne 2 höher als die Sitzfläche 3 angeordnet ist, wie es nicht nur bei Fahrzeugsitzen, sondern auch bei herkömmlichen Stühlen oder Bürostühlen häufig der Fall ist.

Gemäss Figur 7 ist ein Halteelement 5.8 aufgezeigt, welches ebenfalls mit der Halteplatte 13.2 und 13.3 entsprechend der Figuren 5 und 6 versehen ist. Dabei umgreift zumindest teilweise der Aufnahmeträger 6.7 die Sitzfläche 3 und verleiht dem Halteelement 5.8 zusätzlich Halt. Auch hier können die entreprechenden Flächen, welche dem Kissen 1, der Rückenlehne 2 oder der Sitzfläche 3 zugeordnet sind, mit Haftstreifen 10 versehen sein.

Gemäss Figur 8 ist ein Kissen 1 an einem Halteelement 5.5 festgelegt, wobei dem Kissen 1 ein beheizbarer Überzug 16 zugeordnet ist. Dieser dient zum Erwärmen des Rückens, er kann beispielsweise im Sommer entnommen werden. Ein Stecker 17 dient der Stromversorgung und kann beispielsweise in dem Zigarettenanzünder, als Energiequelle, eingesteckt werden.

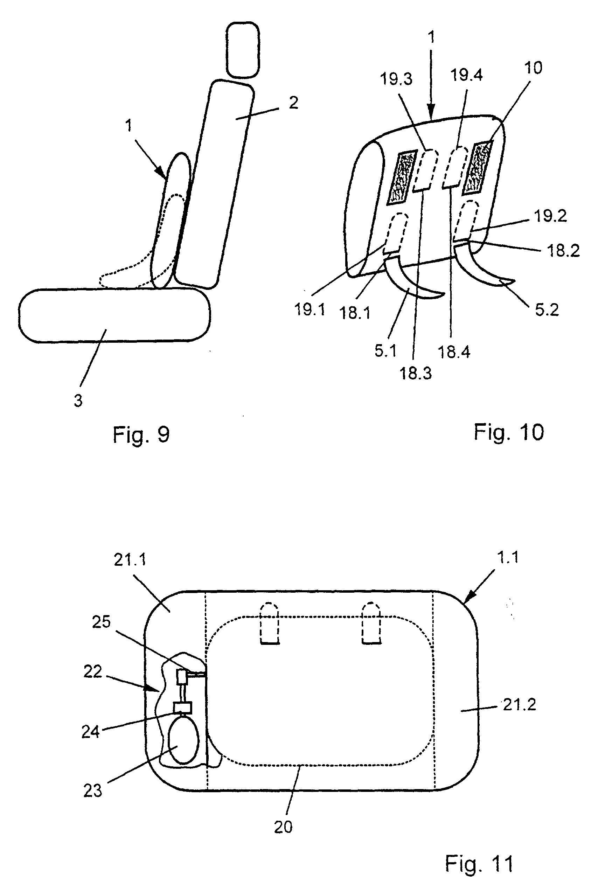

Bei einem weiteren Ausführungsbeispiel der Erfindung gemäss den Figuren 9 und 10 können die Bügel 5.1 und 5.2 durch Schlitze 18.1 bis 18.4 in gestrichelt angedeutet Taschen 19.1 bis 19.4 in dem Kissen 1 eingesteckt sein. Dabei können die Taschen 19.3 und 19.4 und/oder die Taschen 19.1 und 19.2 auch auf der Vorderseite des Kissens 1 angeordnet sein.

Werden die Halteelemente 5.1 und 5.2 in die im unteren Bereich des Kissens 1 angeordneten Taschen 19.1 und 19.2 eingesteckt, so ergibt sich eine Lage des Kissens 1 gegenüber der Rückenlehne 2, wie sie in Figur 9 durchgezogen dargestellt ist. Das Kissen liegt in etwa mit seiner gesamten Rückenfläche der Rückenlehne 2 an.

Werden dagegen die Halteelemente 5.1 und 5.2 in die Taschen 19.3 und 19.4 gesteckt, so ergibt sich eine Anordnung des Kissens 1 gegenüber Rückenlehne 2 und Sitzfläche 3, wie gestrichelt in Figur 9 dargestellt. Dies ergibt eine Unterstützung für ein legereres Sitzen.

Gemäss Figur 11 ist auch daran gedacht, ein Kissen mit einem aufblasbaren Luftsack 20 zu versehen. Dieser Luftsack 20 befindet sich bevorzugt zwischen zwei weichen Schaumstoffteilen, die wiederum seitlich von härteren Schaumstoffstreifen 21.1 und 21.2 begrenzt sind. In dem Streifen 21.1 befindet sich eine Einrichtung 22 zum Befüllen des Luftsackes 20 mit einem Gas. Im gezeigten Ausführungsbeispiel weist diese Einrichtung 22 eine handbetätigbare Luftpumpe 23 auf, die über ein Ablassventil 24 und eine Leitung 25 mit dem Luftsack 20 verbunden ist. Auch das Ablassventil 24 ist handbetätigbar.

Die gesamte Einrichtung 22 befindet sich innerhalb des Kissens 1.1 bzw. in dem Streifen 21.1, so dass sie von aussen nicht erkennbar ist. Die Stellen, an denen eine Betätigung der Luftpumpe 23 bzw. des Ablassventils 24 erfolgen kann, können mit entsprechenden Markierungen auf einen Bezugsstoff gekennzeichnet werden.

## Patentansprüche

1. Einrichtung zum wiederlösbaren Festlegen von wenigstens einem Kissen (1, 1.1) an einer Rückenlehne (2) und oder Sitzfläche (3) eines Sitzelementes (4), insbesondere Fahrzeugsitzes, Stuhles oder Sofas, wobei wenigstens ein Halteelement (5.1 bis 5.8) zur Aufnahme des zumindest einen Kissens (1, 1.1) dem Sitzelement (4) wiederlösbar zugeordnet und das zumindest eine Halteelement (5.1 bis 5.8) bügelartig und/oder winkelig ausgebildet ist,
**dadurch gekennzeichnet,**
**dass** das Halteelement (5.1 bis 5.5) aus einem Aufnahmeträger (6.1 bis 6.4) und einem daran anschliessenden Stützträger (7.1 bis 7.4) gebildet ist, wobei der Aufnahmeträger (6.1 bis 6.4) gewölbt und elastisch zu der Rückenlehne (2) hin ausgerichtet, ausgebildet ist, sodass durch die Wölbung des Aufnahmeträgers (6.1 bis 6.4) sich das Halteelement (5.1 bis 5.5) vorgespannt zwischen Sitzfläche (3) und Rückenlehne (2) des Sitzelementes (5) einsetzen lässt.

2. Einrichtung nach Anspruch 1, **dadurch gekennzeichnet, dass** der Aufnahmeträger (6.1 bis 6.4) streifenartig ausgebildet ist.

3. Einrichtung nach Anspruch 1 oder 2, **dadurch gekennzeichnet, dass** Aufnahmeträger (6.1 bis 6.4) und/oder Stützträger (7.1 bis 7.4) an einer inneren- und/oder äusseren Fläche (8, 9) zumindest teilweise mit Haftstreifen (10), insbesondere Klettbänder versehen ist.

4. Einrichtung nach wenigstens einem der Ansprüche 1 bis 3, **dadurch gekennzeichnet, dass** der Aufnahmeträger (6.1 bis 6.4) und/oder Stützträger (7.1 bis 7.4) der Halteelemente (5.1 bis 5.5) aus elastischem Material einteilig oder mehrteilig gebildet ist.

5. Einrichtung nach wenigstens einem der Ansprüche 1 bis 4, **dadurch gekennzeichnet, dass** dem Stützträger (7.1 bis 7.4) und/oder dem Aufnahmeträger (6.1 bis 6.7) fest oder wiederlösbar eine Halteplatte (13.1 bis 13.3) zugeordnet ist.

6. Einrichtung nach Anspruch 5, **dadurch gekennzeichnet, dass** die Halteplatte (13, 13.1 bis 13.3) über den Stützträger (7.1 bis 7.4) herausragt und ggf. mit Haftstreifen (10) einseitig oder beidseitig versehen ist.

7. Einrichtung nach Anspruch 5 oder 6, **dadurch gekennzeichnet, dass** die Halteplatte (13, 13.1) gewölbt an einer Unterseite (14) des Stützträgers (7.4) anschliesst.

8. Einrichtung nach wenigstens einem der Ansprüche 1 bis 7, **dadurch gekennzeichnet, dass** das Halteelement (5.1 bis 5.5) vorgespannt zwischen Sitzfläche (3) und Rückenlehne (2) gehalten ist, wobei der Stützträger (7.1 bis 7.4) zwischen Sitzfläche (3) und Rückenlehne (2) eingreift und der Aufnahmeträger (6.1 bis 6.4) an der Rückenlehne (2) anliegt.

9. Einrichtung nach wenigstens einem der Ansprüche 1 bis 8, **dadurch gekennzeichnet, dass** das Halteelement (5.1 bis 5.8) streifenartig oder schalenartig ausgebildet ist.

10. Einrichtung nach wenigstens einem der Ansprüche 1 bis 9, **dadurch gekennzeichnet, dass** ein Kissen (1) an zwei nebeneinander angeordneten und zueinander beabstandeten Halteelementen (5.1, 5.2) ggf. höhenverstellbar angeordnet ist.

11. Einrichtung nach wenigstens einem der Ansprüche 1 bis 10, **dadurch gekennzeichnet, dass** der Stützträger (7.1 bis 7.4) einseitig oder beidseitg von dem Aufnahmeträger (6.1 bis 6.4) abragt.

12. Einrichtung nach wenigstens einem der Ansprüche 1 bis 11, **dadurch gekennzeichnet, dass** das Halteelement (5.1 bis 5.8), insbesondere der Aufnahmeträger (6.1 bis 6.7) mit einer verschiebbar gelagerten Halteplatte (13.3) versehen ist.

13. Einrichtung nach Anspruch 12, **dadurch gekennzeichnet, dass** der Aufnahmeträger (6.1 bis 6.7) in einen vertikalen Spalt (S) zwischen Sitzfläche (3) und Rückenlehne (2) eingreift, wobei die Halteplatte (13.3) an der Rückenlehne (2) angreift und den Aufnahmeträger (6.1 bis 6.7) abstützt.

14. Einrichtung nach wenigstens einem der Ansprüche 1 bis 13, **dadurch gekennzeichnet, dass** der Aufnahmeträger (6.1 bis 6.7) eine Sitzfläche (3) nahe der Rückenlehne (2) zumindest teilweise umgreift.

15. Einrichtung nach Anspruch 1 oder 2, **dadurch gekennzeichnet, dass** im Kissen (1) Taschen (19.1 - 19.4) zur Aufnahme der Halteelemente vorgesehen sind.

16. Einrichtung nach Anspruch 15, **daduch gekennzeichnet, dass** die Taschen (19.1 - 19.4) in unterschiedlicher Höhe im Kissen (1) angeordnet sind.

17. Einrichtung nach wenigstens einem der Ansprüche 1 bis 16, **dadurch gekennzeichnet, dass** im Kissen (1.1) ein befüllbarer Luftsack (20) vorgesehen ist.

18. Einrichtung nach Anspruch 17, **dadurch gekennzeichnet, dass** der Luftsack (20) mit einer Einrichtung (22) zum Befüllen in Verbindung steht.

19. Einrichtung nach Anspruch 18, **dadurch gekennzeichnet, dass** in dem Kissen (1.1) eine Luftpumpe (23), ein handbetätigbares Ablassventil (24) und eine Zuleitung (25) zum Luftsack (20) vorgesehen sind.

## Claims

1. Arrangement for the re-releasable securement of at least one cushion (1, 1.1) to a back-rest (2) and/or seating area (3) of a seat member (4), more especially a vehicle seat, chair or sofa, at least one retaining member (5.1 to 5.8) being re-releasably associated with the seat member (4) for receiving at least one cushion (1, 1.1), and at least one retaining member (5.1 to 5.8) having a bow-shaped and/or angular configuration, **characterised in that** the retaining member (5.1 to 5.5) is formed from a receiver support (6.1 to 6.4) and a support (7.1 to 7.4) communicating therewith, the receiver support (6.1 to 6.4) being configured to be orientated in a curved and resilient manner towards the back-rest (2) so that, because of the curvature of the receiver support (6.1 to 6.4), the retaining member (5.1 to 5.5) can be inserted in an initially tensioned manner between seating area (3) and back-rest (2) of the seat member (5).

2. Arrangement according to claim 1, **characterised in that** the receiver support (6.1 to 6.4) has a strip-like configuration.

3. Arrangement according to claim 1 or 2, **characterised in that** receiver support (6.1 to 6.4) and/or support (7.1 to 7.4) are/is provided, on an inner and/or outer surface (8, 9), at least partially with adhesive strips (10), more especially velcro strips.

4. Arrangement according to at least one of claims 1 to 3, **characterised in that** the receiver support (6.1 to 6.4) and/or support (7.1 to 7.4) of the retaining members (5.1 to 5.5) are/is formed in a single piece or in multiple pieces from resilient material.

5. Arrangement according to at least one of claims 1 to 4, **characterised in that** a retaining plate (13.1 to 13.3) is associated securely or re-releasably with the support (7.1 to 7.4) and/or the receiver support (6.1 to 6.7).

6. Arrangement according to claim 5, **characterised in that** the retaining plate (13, 13.1 to 13.3) protrudes beyond the support (7.1 to 7.4) and is possibly provided with adhesive strips (10) on one side or on both sides.

7. Arrangement according to claim 5 or 6, **characterised in that** the retaining plate (13, 13.1) communicates with an underside (14) of the support (7.4) in a curved manner.

8. Arrangement according to at least one of claims 1 to 7, **characterised in that** the retaining member (5.1 to 5.5) is retained in an initially tensioned manner between seating area (3) and back-rest (2), the support (7.1 to 7.4) engaging between seating area (3) and back-rest (2), and the receiver support (6.1 to 6.4) abutting against the back-rest (2).

9. Arrangement according to at least one of claims 1 to 8, **characterised in that** the retaining member (5.1 to 5.8) has a strip-like or dish-like configuration.

10. Arrangement according to at least one of claims 1 to 9, **characterised in that** a cushion (1) is disposed on two adjacently disposed and spaced-apart retaining members (5.1, 5.2), possibly in a vertically adjustable manner.

11. Arrangement according to at least one of claims 1 to 10, **characterised in that** the support (7.1 to 7.4) projects from the receiver support (6.1 to 6.4) on one side or on both sides.

12. Arrangement according to at least one of claims 1 to 11, **characterised in that** the retaining member (5.1 to 5.8), more especially the receiver support (6.1 to 6.7), is provided with a displaceably mounted retaining plate (13.3).

13. Arrangement according to claim 12, **characterised in that** the receiver support (6.1 to 6.7) engages in a vertical gap (S) between seating area (3) and back-rest (2), the retaining plate (13.3) co-operating with the back-rest (2) and supporting the receiver support (6.1 to 6.7).

14. Arrangement according to at least one of claims 1 to 13, **characterised in that** the receiver support (6.1 to 6.7) engages at least partially around a seating area (3) in the vicinity of the back-rest (2).

15. Arrangement according to claim 1 or 2, **characterised in that** pockets (19.1 - 19.4) are provided in the cushion (1) to accommodate the retaining members.

16. Arrangement according to claim 15, **characterised in that** the pockets (19.1 - 19.4) are disposed in the cushion (1) at variable heights.

17. Arrangement according to at least one of claims 1 to 16, **characterised in that** a fillable airbag (20) is provided in the cushion (1.1).

18. Arrangement according to claim 17, **characterised in that** the airbag (20) communicates with a filling arrangement (22).

19. Arrangement according to claim 18, **characterised in that** an air pump (23), a manually operable release valve (24) and a supply line (25) leading to the airbag (20) are provided in the cushion (1.1).

## Revendications

1. Dispositif permettant la fixation amovible d'au moins un coussin (1, 1.1) sur un dossier (2) et/ou la surface d'assise (3) d'un siège (4), en particulier de siège de véhicule, chaise ou sofa, où, au moins un élément support (5.1 à 5.8), est posé d'une façon amovible sur le siège (4) pour recevoir au moins un coussin (1. 1.1) et l'un ou les éléments supports (5.1 à 5.8) sont conçus en forme d'étrier et/ou en forme angulaire,
**caractérisé en ce que**
l'élément support (5.1 à 5.5) est formé d'un support de réception (6.1 à 6.4) et d'un support d'appui (7.1 à 7.4) lui faisant suite, le support de réception (6.1 à 6.4) étant arrondi et élastique en direction du dossier (2), l'arrondi de du support de réception (6.1 à 6.4) permettant d'introduire l'élément support (5.1 à 5.5) précontraint entre la surface d'assise (3) et le dossier (2) du siège (5).

2. Dispositif suivant la revendication 1,
**caractérisé en ce que**
le support de réception (6.1 à 6.4) est réalisé sous forme de bandes.

3. Dispositif suivant la revendication 1 ou 2,
**caractérisé en ce que**
le support de réception (6.1 à 6.4) et le support d'appui (7.1 à 7.4), sont pourvus sur une face intérieure (8) et/ou une face extérieure (9), au moins partiellement, de bandes adhésives (10), en particulier, de bandes (auto) adhésives.

4. Dispositif suivant l'une des revendications 1 à 3,
**caractérisé en ce que**
le support de réception (6.1 à 6.4) et/ou le support d'appui (7.1 à 7.4) de l'élément support (5.1 à 5.5) sont formés d'un matériau élastique, en une ou plusieurs pièces.

5. Dispositif suivant l'une, au moins, des revendications 1 à 4,
**caractérisé en ce que**
sur le support d'appui (7.1 à 7.4), et/ou sur le support de réception (6.1 à 6.7) est disposée une plaque support (13.1 à 13.3), fixe ou amovible.

6. Dispositif suivant la revendication 5,
**caractérisé en ce que**
la plaque support (13, 13.1 à 13.3) dépasse du support d'appui (7.1 à 7.4) et qu'elle est éventuellement équipée, sur l'un ou sur ses deux côtés, de bandes adhésives (10).

7. Dispositif suivant la revendication 5 ou 6,
**caractérisé en ce que**
la plaque support arrondie (13, 13.1) se trouve dans le prolongement de l'une des faces inférieures (14) du support d'appui (7.4).

8. Dispositif suivant l'une, au moins, des revendications 1 à 7,
**caractérisé en ce que**
l'élément support (5.1 à 5.5) précontraint est maintenu précontraint entre la surface d'assise (3) et le dossier (2), tandis que le support d'appui (7.1 à 7.4) s'insère entre la surface d'assise (3) et le dossier (2), et que le support de réception (6.1 à 6.4) vient en contact avec le dossier (2).

9. Dispositif suivant l'une, au moins, des revendications 1 à 8,
**caractérisé en ce que**
l'élément support (5.1 à 5.5) est constitué en forme de bandes ou de coque.

10. Dispositif suivant l'une, au moins, des revendications 1 à 9,
**caractérisé en ce que**
un coussin (1) est placé, dans une position éventuellement réglable en hauteur, sur deux éléments supports (5.1, 5.2) disposés l'un à côté de l'autre et à une certaine distance l'un de l'autre.

11. Dispositif suivant l'une, au moins, des revendications 1 à 10,
**caractérisé en ce que**
le support d'appui (7.1 à 7.4) dépasse du support de réception (6.1 à 6.4), d'un côté ou des deux côtés.

12. Dispositif suivant l'une, au moins, des revendications 1 à 11,
**caractérisé en ce que**
l'élément support (5.1 à 5.8), et en particulier le support de réception (6.1 à 6.7), comporte une plaque support (13.3) placée en position réglable.

13. Dispositif suivant la revendication 12,
**caractérisé en ce que**
le support de réception (6.1 à 6.7) s'insère dans un intervalle vertical (S) entre la surface d'assise (3) et le dossier (2), la plaque de maintien (13.3) venant en prise sous le dossier (2) et soutenant le support de réception (6.1 à 6.7).

14. Dispositif suivant l'une, au moins, des revendications 1 à 13,
**caractérisé en ce que**
le support de réception (6.1 à 6.7) entoure, au moins partiellement une surface d'assise (3)au voisinage du dossier (2).

15. Dispositif suivant la revendication 1 ou 2,
**caractérisé en ce que**
des poches (19.1 - 19.4) sont prévues dans le coussin (1) pour recevoir les éléments supports.

16. Dispositif suivant la revendication 15,
**caractérisé en ce que**
les poches (19.1 - 19.4) sont placées dans le coussin (1) à une hauteur variable.

17. Dispositif suivant l'une, au moins, des revendications 1 à 16,
**caractérisé en ce qu'**
un sac gonflable (20) est prévu dans le coussin (1.1).

18. Dispositif suivant l'une, au moins des revendications 1 à 16,
**caractérisé en ce que**
le sac (20) est relié à un dispositif de gonflage (22).

19. Dispositif suivant la revendication 18,
**caractérisé en ce que**
un gonfleur (23), un détendeur (24) et une tuyauterie (25) de raccordement au sac à air (20) sont installés dans le coussin (1.1).
